# EUROPEAN PATENT APPLICATION

(11) **EP 4 667 313 A1**
(43) Date of publication of application: **24.12.2025**
(21) Application number: 24182808.6
(22) Date of filing: 18.06.2024
(51) Int. Cl.: B60W 50/00

(54) **DETERMINING VEHICLE CONTROL PARAMETERS USING PREDICTIVE OPTIMIZATION WITH ENHANCED CONSTRAINT**

(71) Applicant: VOLVO TRUCK CORPORATION, 405 08 Göteborg (SE)
(72) Inventor: VAN DAM, Sander, 417 53 GÖTEBORG (SE); WISELL, Lukas, 412 50 GÖTEBORG (SE); GELSO, Esteban, 421 51 VÄSTRA FRÖLUNDA (SE); SADEGHI KATI, Maliheh, 433 51 ÖJERSJÖ (SE); ERDINC, Umur, 413 26 GÖTEBORG (SE); MURGOVSKI, Nikolce, 413 26 GÖTEBORG (SE)
(74) Representative: Kransell & Wennborg KB

(57) **Abstract**

A computer system (15) comprising processing circuitry (21) configured to: determine a set of vehicle control parameters, using predictive optimization (29) of a vehicle model with a first prediction horizon (h₁), the predictive optimization (29) being constrained by a set of allowed vehicle states at the first prediction horizon (h₁); and control an operation of a vehicle (1) using the determined set of vehicle control parameters, wherein: the set of allowed vehicle states at the first prediction horizon (h₁) is a set of initial vehicle states (S₀) estimated to result in a set of safe vehicle states (Sₕ₂) at a second prediction horizon (h₂) longer than the first prediction horizon (h₁).

## Description

### TECHNICAL FIELD

The disclosure relates generally to determination of vehicle control parameters using predictive optimization. In particular aspects, the disclosure relates to determination of vehicle control parameters using predictive optimization with enhanced constraint. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Control using predictive optimization of a vehicle model, such as model predictive control (MPC), for vehicle motion control may be beneficial. For instance, this type of vehicle control may be used to avoid unsafe vehicle states, while optimizing for, for example, energy efficiency.

However, control using predictive optimization can be rather computationally intense, so that its use may be limited to a relatively short prediction horizon, such as a few seconds or less. In existing implementations, use of such a relatively short prediction horizon may result in feasibility issues.

It would be desirable to provide for improved vehicle motion control using predictive optimization of a vehicle model.

### SUMMARY

According to a first aspect of the disclosure, there is provided a computer system comprising processing circuitry configured to: determine a set of vehicle control parameters, using predictive optimization of a vehicle model with a first prediction horizon, the predictive optimization being constrained by a set of allowed vehicle states at the first prediction horizon; and control an operation of a vehicle using the determined set of vehicle control parameters, wherein: the set of allowed vehicle states at the first prediction horizon is a set of initial vehicle states estimated to result in a set of safe vehicle states at a second prediction horizon longer than the first prediction horizon. The first aspect of the disclosure may seek to enable improved predictive optimization of the vehicle model using a relatively short prediction horizon. This may, in turn, enable improved vehicle motion control with limited computational resources. A technical benefit may include to reduce the risk of the predictive optimization of the vehicle model resulting in an unfeasible vehicle state, at the first prediction horizon. An unfeasible vehicle state at the first prediction horizon may be a vehicle state which is a safe vehicle state at the first prediction horizon, but from which there is no feasible way to end up with a safe vehicle state at the second prediction horizon, which is further away than the first prediction horizon. For instance, getting from an unfeasible vehicle state at the first prediction horizon to a safe vehicle state at the second prediction horizon may require one or more vehicle control parameters that cannot be fulfilled by the vehicle. Such vehicle control parameters may be referred to as unfeasible vehicle parameters.

The predictive optimization of the vehicle model may be implemented as the, *per* se, known concept of model predictive control (MPC), which, in short, involves optimizing a cost function over the receding horizon. The vehicle model may, for example, be a single-track nonlinear model of the vehicle, but it is, *per se,* well known to use other more or less complex vehicle models for predictive optimization. The vehicle may, for example, be a combination vehicle, with a tractor and at least one trailer. The first prediction horizon signifies a first time from a present time, and the second prediction horizon signifies a second time, longer than the first time, from the present time. The second prediction horizon may be at least two times the first prediction horizon, such as at least four times the first prediction horizon. Thus, if the first prediction horizon is, say, 2 seconds, the second prediction horizon may be at least 4 seconds, or at least 8 seconds.

The present inventors have realized that the risk of ending up in an unfeasible vehicle state when using predictive optimization of a vehicle model with a relatively short first prediction horizon can be reduced by constraining the predictive optimization further. The present inventors have found that a beneficial way of providing for a reduction of the risk of unfeasible vehicle states at the first prediction horizon is to determine the set of allowed vehicle states at the first prediction horizon as a set of initial vehicle states estimated to result in a set of safe vehicle states at a second prediction horizon longer than the first prediction horizon.

Optionally in some examples, including in at least one preferred example, the processing circuitry may be configured to determine the set of allowed vehicle states in an offline process using predictive optimization of the vehicle model with the second prediction horizon. A technical benefit may include that the offline process may be allowed to take longer time. Alternatively, or in combination, the offline process may be carried out using other or expanded processing circuitry, with higher capacity than what is available for determining the set of vehicle control parameters and controlling the operation of the vehicle, which is an online process.

Optionally in some examples, including in at least one preferred example, the processing circuitry may be configured to determine the set of allowed vehicle states using machine learning. A technical benefit may include that machine learning provides for relatively fast determination of a large number of vehicle states.

Optionally in some examples, including in at least one preferred example, the processing circuitry may be configured to determine the set of allowed vehicle states using a machine learning model trained with training sets, each being annotated based on a corresponding set of vehicle states resulting from predictive optimization of the vehicle model with the second prediction horizon, starting from the training set. A technical benefit may include that annotation using results from predictive optimization of the vehicle model with the second prediction horizon provides for accurate results from the machine learning model.

Optionally in some examples, including in at least one preferred example, the processing circuitry may be configured to: determine that the predictive optimization of the vehicle model with the first prediction horizon is unable to result in a vehicle state within the set of allowed vehicle states at the first horizon; determine a backup set of vehicle control parameters using a set of predefined rules; and control the vehicle using the backup set of vehicle control parameters. A technical benefit may include that it can be assured that the vehicle is always controlled to a feasible vehicle state, even if the result of the predictive optimization were to be unfeasible. The backup set of vehicle control parameters will not be the result of an optimization, but the vehicle will receive a set of vehicle control parameters known to maximize safety.

Optionally in some examples, including in at least one preferred example, the processing circuitry may be configured to: determine that control of the vehicle using the set of vehicle control parameters resulted in a vehicle state outside the set of allowed vehicle states; and modify the predictive optimization. A technical benefit may include that actual results from the vehicle can be used to improve the predictive optimization, and/or the vehicle model and/or the set of allowed vehicle states at the first prediction horizon.

Optionally in some examples, including in at least one preferred example, the processing circuitry may be configured to: determine the set of allowed vehicle states using the modified predictive optimization of the vehicle model with the second prediction horizon. A technical benefit may include that the determination using the modified predictive optimization will result in an updated set of allowed vehicle states, to replace the previously determined set of allowed of vehicle states.

Optionally in some examples, including in at least one preferred example, the computer system may comprise: first processing circuitry configured to: determine the set of allowed vehicle states in an offline process using predictive optimization of the vehicle model with the second prediction horizon; and second processing circuitry configured to: receive the set of allowed vehicle states from the first processing circuitry; determine the set of vehicle control parameters; and control the vehicle using the determined set of vehicle control parameters. The first processing circuitry and the second processing circuitry may both be comprised in the vehicle, or the first processing circuitry may be at another location. For instance, the first processing circuitry may be in a cloud server or similar. A technical benefit may include that the first processing circuitry and the second processing circuitry may be optimized, at least in some respect, to their respective tasks. Furthermore, the offline processing by the first processing circuitry may be carried out independently of the online processing by the second processing circuitry. Moreover, the first processing circuitry may be configured to serve not only the second processing circuitry of one particular vehicle, but the second processing circuitry of each of a plurality of vehicles.

Optionally in some examples, including in at least one preferred example, the first processing circuitry may be configured to determine a plurality of sets of allowed vehicle states, each being adapted to a corresponding vehicle configuration; the second processing circuitry may be comprised in a vehicle; and the second processing circuitry may be configured to receive a set of allowed vehicle states adapted to a vehicle configuration of the vehicle comprising the second processing circuitry. A technical benefit may include that a vehicle of a vehicle combination can be provided with an updated set of allowed vehicle states, at the first horizon, when the vehicle is paired with a different vehicle to form a different vehicle combination.

The computer system according to examples of the present disclosure may advantageously be included in a vehicle.

For examples of the computer system comprising first processing circuitry and second processing circuitry, the second processing circuitry may be included in a vehicle. The first processing circuitry may be provided externally to the vehicle.

According to a second aspect of the disclosure, there is provided a computer-implemented method, the method comprising: determining a set of vehicle control parameters, using predictive optimization of a vehicle model with a first prediction horizon, the predictive optimization being constrained by a set of allowed vehicle states at the first prediction horizon; and controlling an operation of a vehicle using the determined set of vehicle control parameters, wherein: the set of allowed vehicle states at the first prediction horizon is a set of initial vehicle states estimated to result in a set of safe vehicle states at a second prediction horizon longer than the first prediction horizon. The second aspect of the disclosure may seek to enable improved predictive optimization of the vehicle model using a relatively short prediction horizon. This may, in turn, enable improved vehicle motion control with limited computational resources. A technical benefit may include to reduce the risk of the predictive optimization of the vehicle model resulting in an unfeasible vehicle state, at the first prediction horizon. An unfeasible vehicle state at the first prediction horizon may be a vehicle state which is a safe vehicle state at the first prediction horizon, but from which there is no feasible way to end up with a safe vehicle state at the second prediction horizon, which is further away than the first prediction horizon. For instance, getting from an unfeasible vehicle state at the first prediction horizon to a safe vehicle state at the second prediction horizon may require one or more vehicle control parameters that cannot be fulfilled by the vehicle. Such vehicle control parameters may be referred to as unfeasible vehicle parameters.

The predictive optimization of the vehicle model may be implemented as the, *per* se, known concept of model predictive control (MPC), which, in short, involves optimizing a cost function over the receding horizon. The vehicle model may, for example, be a single-track nonlinear model of the vehicle. The vehicle may, for example, be a combination vehicle, with a tractor and at least one trailer. The first prediction horizon signifies a first time from a present time, and the second prediction horizon signifies a second time, longer than the first time, from the present time. The second prediction horizon may be at least two times the first prediction horizon, such as at least four times the first prediction horizon. Thus, if the first prediction horizon is, say, 2 seconds, the second prediction horizon may be at least 4 seconds, or at least 8 seconds.

The present inventors have realized that the risk of ending up in an unfeasible vehicle state when using predictive optimization of a vehicle model with a relatively short first prediction horizon can be reduced by constraining the predictive optimization further. The present inventors have found that a beneficial way of providing for a reduction of the risk of unfeasible vehicle states at the first prediction horizon is to determine the set of allowed vehicle states at the first prediction horizon as a set of initial vehicle states estimated to result in a set of safe vehicle states at a second prediction horizon longer than the first prediction horizon.

Optionally in some examples, including in at least one preferred example, the method may comprise determining the set of allowed vehicle states in an offline process using predictive optimization of the vehicle model with the second prediction horizon. A technical benefit may include that the offline process may be allowed to take longer time. Alternatively, or in combination, the offline process may be carried out using other or expanded processing circuitry, with higher capacity than what is available for determining the set of vehicle control parameters and controlling the operation of the vehicle, which is an online process.

Optionally in some examples, including in at least one preferred example, the method may comprise determining the set of allowed vehicle states using machine learning. A technical benefit may include that machine learning provides for relatively fast determination of a large number of vehicle states.

Optionally in some examples, including in at least one preferred example, the method may comprise determining the set of allowed vehicle states using a machine learning model trained with training sets, each being annotated based on a corresponding set of vehicle states resulting from predictive optimization of the vehicle model with the second prediction horizon, starting from the training set. A technical benefit may include that annotation using results from predictive optimization of the vehicle model with the second prediction horizon provides for accurate results from the machine learning model.

Optionally in some examples, including in at least one preferred example, the method may comprise: determining that the predictive optimization of the vehicle model with the first prediction horizon is unable to result in a vehicle state within the set of allowed vehicle states at the first horizon; determining a backup set of vehicle control parameters using a set of predefined rules; and controlling the vehicle using the backup set of vehicle control parameters. A technical benefit may include that it can be assured that the vehicle is always controlled to a feasible vehicle state, even if the result of the predictive optimization were to be unfeasible. The backup set of vehicle control parameters will not be the result of an optimization, but the vehicle will receive a set of vehicle control parameters known to maximize safety.

Optionally in some examples, including in at least one preferred example, the method may comprise: determining that control of the vehicle using the set of vehicle control parameters resulted in a vehicle state outside the set of allowed vehicle states; and modifying the predictive optimization. A technical benefit may include that actual results from the vehicle can be used to improve the predictive optimization, and/or the vehicle model and/or the set of allowed vehicle states at the first prediction horizon.

Optionally in some examples, including in at least one preferred example, the method may comprise: determining the set of allowed vehicle states using the modified predictive optimization of the vehicle model with the second prediction horizon. A technical benefit may include that the determination using the modified predictive optimization will result in an updated set of allowed vehicle states, to replace the previously determined set of allowed of vehicle states.

According to a third aspect of the disclosure, there is provided a computer program product comprising program code for performing, when executed by the processing circuitry, the method of the second aspect of the disclosure.

According to a fourth aspect of the disclosure, there is provided a non-transitory computer-readable storage medium comprising instructions, which when executed by the processing circuitry, cause the processing circuitry to perform the method of the second aspect of the disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary vehicle according to an example.
**FIG. 2** is an exemplary computer system according to an example.
**FIG. 3** is an exemplary computer system according to an example.
**FIG. 4** is an exemplary method according to an example.
**FIG. 5** is an illustration of first and second prediction horizons.
FIGS. 6A-B schematically illustrate predictive optimization of a vehicle model with a first prediction horizon.
**FIG. 7** schematically illustrates predictive optimization of a vehicle model with a second prediction horizon.
**FIG. 8** is an illustration of determination of example of a set of allowed vehicle states at the first prediction horizon.
**FIG. 9** is an illustration of determination of example of a set of allowed vehicle states at the first prediction horizon.
**FIG. 10** is an exemplary method according to an example.
**FIG. 11** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

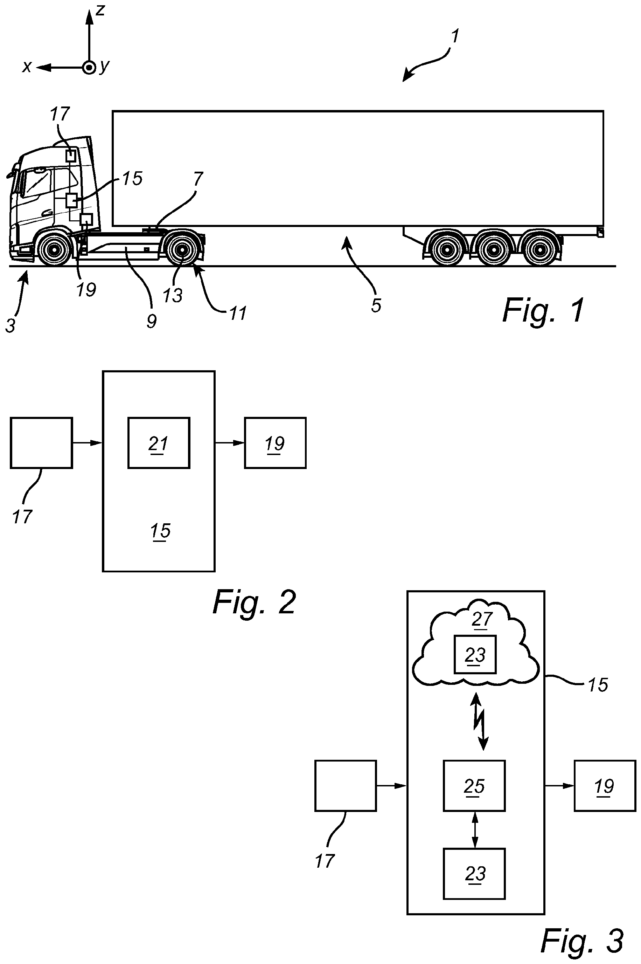

Fig. 1 is an exemplary vehicle 1 according to an example. Referring to Fig. 1, the exemplary vehicle 1 comprises a first vehicle member 3 and a second vehicle member 5 coupled to the first vehicle member 3. In this example vehicle 1, the first vehicle member 3 is an electric vehicle, here in the form of a battery electric vehicle (BEV) tractor, and the second vehicle member 5 is a semitrailer, coupled to the first vehicle member through a so-called fifth wheel coupling 7. It should be noted that the present disclosure is not limited this example vehicle 1, but applies to many other vehicles, such as vehicles comprising a single vehicle member or vehicles including an internal combustion engine, etc.

Referring again to Fig. 1, the first vehicle member 3 has a battery pack 9 and vehicle wheels 11 arranged to rotate around a rotational axis 13 when the vehicle 1 is in motion. Further, the first vehicle member 3 comprises a computer system 15 and at least one sensing system 17. The computer system 15 can receive input from the at least one sensing system 17, and can control operation of the vehicle 1, by controlling at least one vehicle system 19. In Fig. 1, the at least one vehicle system 19 is represented by a single schematic box. The at least one vehicle system 19 may include the systems needed to control operation of the vehicle 1, such as, for example, a propulsion system of the vehicle 1, a braking system of the vehicle 1, etc., using a set of vehicle control parameters. The vehicle control parameters may, in examples, be high level control parameters, such as requested longitudinal forces and lateral forces. In such examples, another computer system of the vehicle 1 may receive the high level control parameters, and determine control commands for various vehicle subsystems for achieving the high level control parameters. In other examples, the vehicle control parameters may be the control commands for the various vehicle subsystems.

Fig. 2 is an exemplary computer system 15 according to an example. Referring to Fig. 2, the computer system 15 comprises processing circuitry 21 configured to receive, from the at least one sensing system 17, and possibly from other sources, parameter values together defining a present vehicle state. As will be described in greater detail further below, the processing circuitry 21 is further configured to determine a set of vehicle control parameters, using predictive optimization of a vehicle model with a first prediction horizon, the predictive optimization being constrained by a set of allowed vehicle states at the first prediction horizon, and to control an operation of the vehicle 1 using the determined set of vehicle control parameters. According to an example, the determined set of vehicle control parameters may be provided to the at least one vehicle system 19, as described above. For improved operation of the vehicle 1, the set of allowed vehicle states at the first prediction horizon is a set of initial vehicle states estimated to result in a set of safe vehicle states at a second prediction horizon longer than the first prediction horizon. The processing circuitry 21 is configured to determine the set of vehicle control parameters, and control the operation of the vehicle 1 while the vehicle 1 is in operation. Accordingly, the set of vehicle control parameters is determined by the processing circuitry 21 in an online process. The processing circuitry 21 may additionally be configured to determine the set of allowed vehicle states in an offline process using predictive optimization of the vehicle model with the second prediction horizon. In this exemplary case, the offline process may be carried out while the vehicle 1 is not in operation.

Fig. 3 is an exemplary computer system 15 according to an example. Referring to Fig. 3, the computer system 15 comprises first processing circuitry 23 and second processing circuitry 25. Fig. 3 illustrates two examples for the first processing circuitry 23. According to one example, the first processing circuitry 23 may be provided locally, in the vehicle 1, together with the second processing circuitry 25. According to another example, the first processing circuitry 23 may be provided remotely, such as in a server in the cloud 27. In the computer system 15 according to these examples, the first processing circuitry 23 may be configured to: determine the set of allowed vehicle states in an offline process using predictive optimization of the vehicle model with the second prediction horizon, and the second processing circuitry 25 may be configured to: receive the set of allowed vehicle states from the first processing circuitry 23; determine the set of vehicle control parameters; and control the vehicle 1 using the determined set of vehicle control parameters. Especially in the case where the first processing circuitry 23 is provided remotely, the first processing circuitry 23 may be configured to determine a plurality of sets of allowed vehicle states, each being adapted to a corresponding vehicle configuration; and the second processing circuitry, which may be comprised in the vehicle 1, may be configured to receive a set of allowed vehicle states adapted to a vehicle configuration of the vehicle 1 comprising the second processing circuitry 23. The vehicle configuration may, for example, relate to the number of vehicle members in a vehicle combination, the number of axles, the wheelbases, the unladen weights, etc.

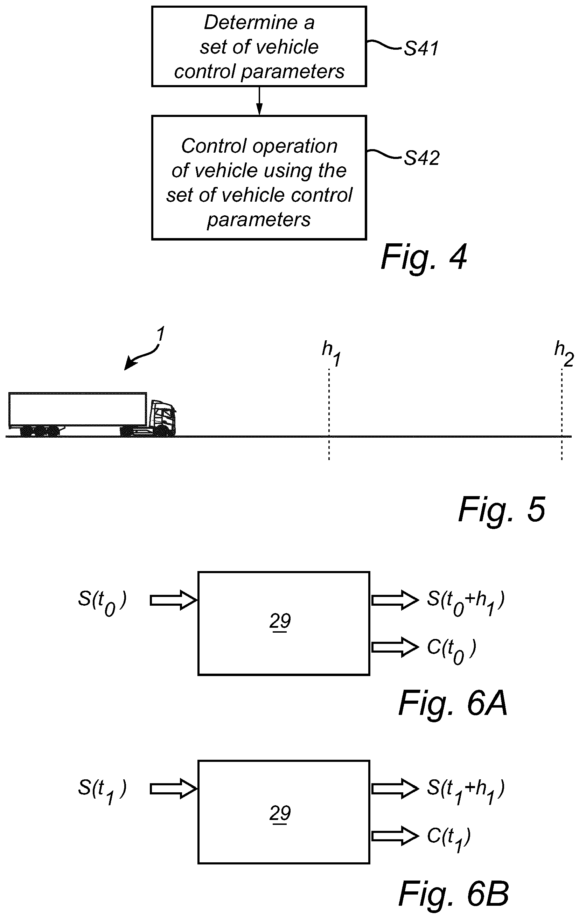

Fig. 4 is an exemplary method according to an example. Referring to the flowchart in Fig. 4, the method first comprises determining S41, by the processing circuitry 21 of the computer system 15 in Fig. 2, or by the second processing circuitry 25 of the computer system 15 in Fig. 3, a set of vehicle control parameters, using predictive optimization of a vehicle model with a first prediction horizon, the predictive optimization being constrained by a set of allowed vehicle states at the first prediction horizon. Subsequently, the processing circuitry 21, or the second processing circuitry 25, controls S42 an operation of the vehicle 1 using the determined set of vehicle control parameters. The set of allowed vehicle states at the first prediction horizon is a set of initial vehicle states estimated to result in a set of safe vehicle states at a second prediction horizon longer than the first prediction horizon.

Fig. 5 is an illustration of first and second prediction horizons for an exemplary vehicle 1. As is schematically indicated in Fig. 5, the first prediction horizon hi and the second prediction horizon h₂ indicate how far ahead in time future vehicle states may be predicted for the vehicle 1, by predictive optimization of a vehicle model. In an implementation of the predictive optimization with the relatively short first prediction horizon h₁, considerably less computing power is needed than in an implementation of the predictive optimization with the relatively long second prediction horizon h₂. In an existing commercial vehicle 1, the processing circuitry 21 (or the second processing circuitry 25) comprised in the vehicle 1 may be capable of performing predictive optimization, such as the Model Predictive Control (MPC) mentioned in the Summary section, with the first prediction horizon hi while operating the vehicle 1, and may not be capable of performing predictive optimization with the second prediction horizon h₂ while operating the vehicle 1.

Figs. 6A-B schematically illustrate predictive optimization of a vehicle model with a first prediction horizon hi. Referring first to Fig. 6A, the predictive optimization algorithm 29, implemented in the processing circuitry 21 (or the second processing circuitry 25) receives a present vehicle state, here denoted S(t₀). As a result of the optimization, the predictive optimization algorithm 29 provides optimized vehicle states and vehicle control parameter sets for each time step until and including the first prediction horizon hi. The optimized vehicle state at the first prediction horizon is denoted S(t₀+h₁), and the set of present vehicle control parameters is denoted C(t₀). When the time has been incremented a time step from an initial time t₀ to a first time ti, the vehicle has been operated from the initial time t₀ to the first time t₁ under control using the initially determined vehicle control parameters C(t₀). At the first time ti, the predictive optimization algorithm 29 receives a present vehicle state at the first time t1, denoted S(t₁). As a result of the optimization, the predictive optimization algorithm 29 provides optimized vehicle states and vehicle control parameter sets for each time step until and including the first prediction horizon hi as seen from the first time t₁, denoted S(t₁+h₁), and a respective set of present vehicle control parameters C(t₁). The predictive optimization with the first prediction horizon hi proceeds like this, to optimize the predicted vehicle state at the first prediction horizon hi ahead of the present time.

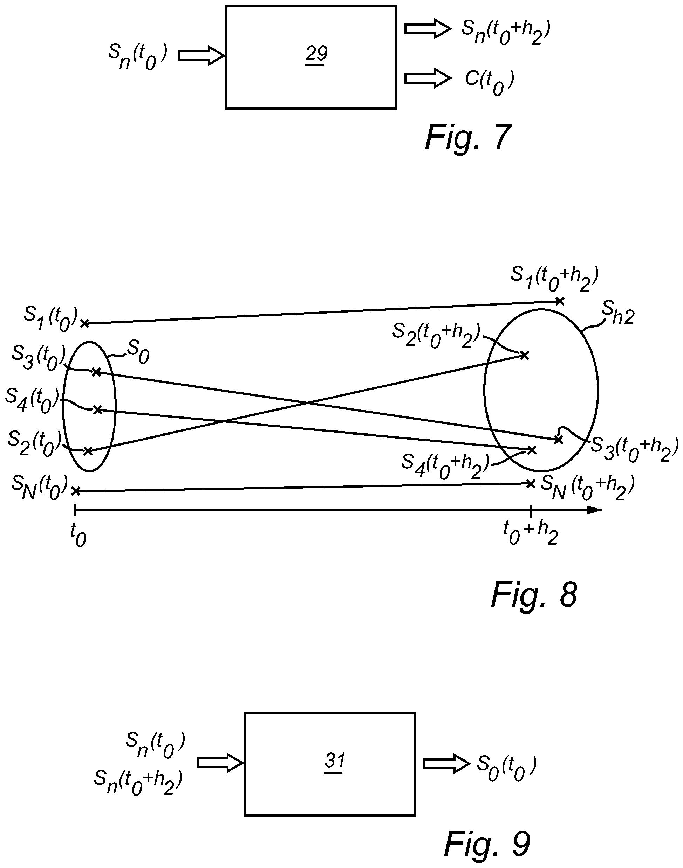

Since the predictive optimization is constrained by a set of allowed vehicle states at the first prediction horizon h₁, the optimized predicted vehicle states may not be an optimum in respect of the optimization criterium or criteria, but may be a suboptimal vehicle state that is within the set of allowed vehicle states at the first prediction horizon hi. As was explained further above in the Summary section, a vehicle state at the first prediction horizon hi that is outside the set of allowed vehicle states at the first prediction horizon hi may be an unfeasible vehicle state, such as a vehicle state that is safe at the first prediction horizon, but that is not an initial vehicle state that can result in a safe vehicle state over time, using predictive optimization with the first prediction horizon hi. To reduce the risk of controlling the vehicle 1 to an unfeasible vehicle state, the set of allowed vehicle states at the first prediction horizon is a set of initial vehicle states estimated to result in a set of safe vehicle states at the second prediction horizon h₂, which may be considerably longer than the first prediction horizon hi. Examples of estimation of the set of allowed vehicle state will not be described with reference to Fig. 7, Fig. 8, and Fig. 9.

Fig. 7 schematically illustrates predictive optimization of a vehicle model with a second prediction horizon h₂. As described above with reference to Fig. 6A, the predictive optimization algorithm 29 receives a present vehicle state, here denoted S(t₀). As a result of the optimization, the predictive optimization algorithm 29 provides an optimized vehicle state at the second prediction horizon h₂, denoted S(t₀+h₂), and a respective set of vehicle control parameters C(t₀). Since it is more computationally intense to perform predictive optimization with a longer prediction horizon, the predictive optimization of the vehicle model with the second prediction horizon h₂ in Fig. 7 may be carried out offline, either with the same processing circuitry 21 (referring to Fig. 2) that performs online predictive optimization and vehicle operation control, or with dedicated second processing circuitry 25 (referring to Fig. 3), which may be provided locally or remotely.

Fig. 8 is an illustration of determination of example of a set of allowed vehicle states at the first prediction horizon hi. According to examples of the present disclosure, the set of allowed vehicle states at the first prediction horizon hi is a set S₀ of initial vehicle states estimated to result in a set Sₕ₂ of safe vehicle states at a second prediction horizon h₂ longer than the first prediction horizon hi. This set S₀ of initial vehicle states and this set Sₕ₂ of safe vehicle states at the second prediction horizon h₂ are schematically illustrated in Fig. 8 by the simplified two-dimensional sets at the initial time t₀ and at the second horizon t₀+h₂, respectively. By performing the predictive optimization of the vehicle model with the second prediction horizon h₂ for a number of initial vehicle states s₁(t₀) - s_{N}(t₀), it can be determined which of the initial vehicle states result in predicted vehicle states s₁(t₀+h₂) - s_{N}(t₀+h₂) at the second prediction horizon h₂ that are inside the set Sₕ₂ of safe vehicle states at the second prediction horizon h₂, and which of the initial vehicle states result in predicted vehicle states that are outside the set S₂ of safe vehicle states at the second prediction horizon h₂.

To reduce the time and/or computational resources needed to determine the set S₀ of initial vehicle states, the initial vehicle state sₙ(t₀), the corresponding predicted vehicle states sₙ(t₀+h₂), and information about whether or not the respective predicted vehicle states sₙ(t₀+h₂) are inside or outside the set Sₕ₂ of safe vehicle states at the second prediction horizon h₂ may be provided as training sets to a machine learning model 31, which can complete the set S₀ of initial vehicle states more efficiently. This is schematically illustrated in Fig. 9.

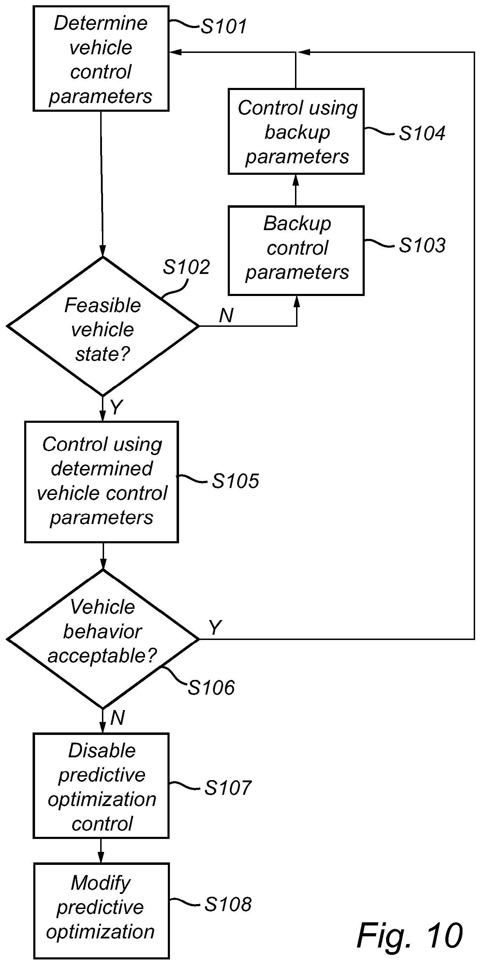

Fig. 10 is an exemplary method according to an example. Referring to the flowchart in Fig. 10, the method first comprises determining S101, by the processing circuitry 21 of the computer system 15 in Fig. 2, or by the second processing circuitry 25 of the computer system 15 in Fig. 3, a set of vehicle control parameters, using predictive optimization of a vehicle model with a first prediction horizon, the predictive optimization being constrained by a set of allowed vehicle states at the first prediction horizon.

Subsequently, it is determined S102 whether or not the predictive optimization is able to determine an optimized vehicle state that is feasible, that is, within the set of allowed vehicle states S₀ at the first prediction horizon h1.

If the predictive optimization cannot determine an optimized vehicle state that is feasible, a backup set of vehicle control parameters is determined S103 using a set of predefined rules; and the vehicle 1 is controlled S104 using the backup set of vehicle control parameters. Thereafter, the method returns to determining S101 vehicle control parameters using predictive optimization.

If the predictive optimization can determine an optimized vehicle state that is feasible, the vehicle 1 is controlled S 105 using the set of vehicle control parameters determined using predictive optimization.

After having applied the determined set of vehicle control parameters, the vehicle behavior may be evaluated S 106. If the vehicle is determined to behave in an acceptable way, the method returns to determining S101 vehicle control parameters using predictive optimization, that is, continues to determine vehicle control parameters using predictive optimization.

If the vehicle behavior is instead determined to be unacceptable, the predictive optimization control of the vehicle 1 is disabled S107, and the predictive optimization is modified S108.

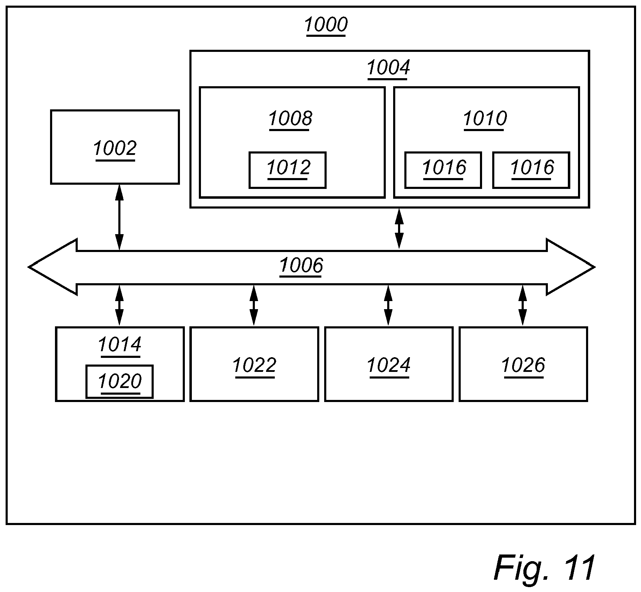

Fig. 11 is a schematic diagram of a computer system 1000 for implementing examples disclosed herein, such as for implementing examples of the computer system 15 according to examples. The computer system 1000 is adapted to execute instructions from a computer-readable medium to perform these and/or any of the functions or processing described herein. The computer system 1000 may be connected (e.g., networked) to other machines in a LAN, an intranet, an extranet, or the Internet, or by direct wired or wireless communication. While only a single device is illustrated, the computer system 1000 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 1000 may comprise at least one computing device or electronic device capable of including firmware, hardware, and/or executing software instructions to implement the functionality described herein. The computer system 1000 may include processing circuitry 1002 (e.g., processing circuitry including one or more processor devices or control units), a memory 1004, and a system bus 1006. The computer system 1000 may include at least one computing device having the processing circuitry 1002. The system bus 1006 provides an interface for system components including, but not limited to, the memory 1004 and the processing circuitry 1002. The processing circuitry 1002 may include any number of hardware components for conducting data or indication processing or for executing computer code stored in memory 1004. The processing circuitry 1002 may, for example, include a general-purpose processor, an application specific processor, a Digital indication Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 1002 may further include computer executable code that controls operation of the programmable device.

The system bus 1006 may be any of several types of bus structures that may further interconnect to a memory bus (with or without a memory controller), a peripheral bus, and/or a local bus using any of a variety of bus architectures. The memory 1004 may be one or more devices for storing data and/or computer code for completing or facilitating methods described herein. The memory 1004 may include database components, object code components, script components, or other types of information structure for supporting the various activities herein. Any distributed or local memory device may be utilized with the systems and methods of this description. The memory 1004 may be communicably connected to the processing circuitry 1002 (e.g., via a circuit or any other wired, wireless, or network connection) and may include computer code for executing one or more processes described herein. The memory 1004 may include non-volatile memory 1008 (e.g., read-only memory (ROM), erasable programmable read-only memory (EPROM), electrically erasable programmable read-only memory (EEPROM), etc.), and volatile memory 1010 (e.g., random-access memory (RAM)), or any other medium which can be used to carry or store desired program code in the form of machine-executable instructions or data structures and which can be accessed by a computer or other machine with processing circuitry 1002. A basic input/output system (BIOS) 1012 may be stored in the non-volatile memory 1008 and can include the basic routines that help to transfer information between elements within the computer system 1000.

The computer system 1000 may further include or be coupled to a non-transitory computer-readable storage medium such as the storage device 1014, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 1014 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 1014 and/or in the volatile memory 1010, which may include an operating system 1016 and/or one or more program modules 1018. All or a portion of the examples disclosed herein may be implemented as a computer program 1020 stored on a transitory or non-transitory computer-usable or computer-readable storage medium (e.g., single medium or multiple media), such as the storage device 1014, which includes complex programming instructions (e.g., complex computer-readable program code) to cause the processing circuitry 1002 to carry out actions described herein. Thus, the computer-readable program code of the computer program 1020 can comprise software instructions for implementing the functionality of the examples described herein when executed by the processing circuitry 1002. In some examples, the storage device 1014 may be a computer program product (e.g., readable storage medium) storing the computer program 1020 thereon, where at least a portion of a computer program 1020 may be loadable (e.g., into a processor) for implementing the functionality of the examples described herein when executed by the processing circuitry 1002. The processing circuitry 1002 may serve as a controller or control system for the computer system 1000 that is to implement the functionality described herein.

The computer system 1000 may include an input device interface 1022 configured to receive input and selections to be communicated to the computer system 1000 when executing instructions, such as from a keyboard, mouse, touch-sensitive surface, etc. Such input devices may be connected to the processing circuitry 1002 through the input device interface 1022 coupled to the system bus 1006 but can be connected through other interfaces, such as a parallel port, an Institute of Electrical and Electronic Engineers (IEEE) 1394 serial port, a Universal Serial Bus (USB) port, an IR interface, and the like. The computer system 1000 may include an output device interface 1024 configured to forward output, such as to a display, a video display unit (e.g., a liquid crystal display (LCD) or a cathode ray tube (CRT)). The computer system 1000 may include a communications interface 1026 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (15) comprising processing circuitry (21) configured to:
determine a set of vehicle control parameters, using predictive optimization (29) of a vehicle model with a first prediction horizon (h₁), the predictive optimization (29) being constrained by a set of allowed vehicle states at the first prediction horizon (h₁); and
control an operation of a vehicle (1) using the determined set of vehicle control parameters, wherein:
the set of allowed vehicle states at the first prediction horizon (h₁) is a set of initial vehicle states (S₀) estimated to result in a set of safe vehicle states (Sₕ₂) at a second prediction horizon (h₂) longer than the first prediction horizon (h₁).

2. The computer system (15) of claim 1, wherein the processing circuitry (21) is configured to determine the set of allowed vehicle states in an offline process using predictive optimization (29) of the vehicle model with the second prediction horizon (h₂).

3. The computer system (15) of claim 2, wherein the processing circuitry (21) is configured to determine the set of allowed vehicle states using machine learning (31).

4. The computer system (15) of claim 3, wherein the processing circuitry (21) is configured to determine the set of allowed vehicle states using a machine learning model (31) trained with training sets, each being annotated based on a corresponding set of vehicle states resulting from predictive optimization (29) of the vehicle model with the second prediction horizon (h₂), starting from the training set.

5. The computer system (15) of any of claims 1-4, wherein the processing circuitry (21) is configured to:
determine that the predictive optimization (29) of the vehicle model with the first prediction horizon (h₁) is unable to result in a vehicle state within the set of allowed vehicle states at the first prediction horizon (h₁);
determine a backup set of vehicle control parameters using a set of predefined rules; and
control the vehicle (1) using the backup set of vehicle control parameters.

6. The computer system (15) of any of claims 1-5, wherein the processing circuitry (21) is configured to:
determine that control of the vehicle (1) using the set of vehicle control parameters resulted in a vehicle state outside the set of allowed vehicle states; and
modify the predictive optimization.

7. The computer system (15) of claim 6, wherein the processing circuitry (21) is configured to:
determine the set of allowed vehicle states using the modified predictive optimization of the vehicle model with the second prediction horizon (h₂).

8. The computer system (15) of any of claims 1-7, wherein the computer system (15) comprises:
first processing circuitry (23) configured to:
determine the set of allowed vehicle states in an offline process using predictive optimization (29) of the vehicle model with the second prediction horizon (h₂); and
second processing circuitry (25) configured to:
receive the set of allowed vehicle states from the first processing circuitry (23);
determine the set of vehicle control parameters; and
control the vehicle (1) using the determined set of vehicle control parameters.

9. The computer system (15) of claim 8, wherein:
the first processing circuitry (23) is configured to determine a plurality of sets of allowed vehicle states, each being adapted to a corresponding vehicle configuration;
the second processing circuitry (25) is comprised in a vehicle (1); and
the second processing circuitry (25) is configured to receive a set of allowed vehicle states adapted to a vehicle configuration of the vehicle comprising the second processing circuitry (25).

10. A vehicle (1) comprising the computer system (15) of any of claims 1-9.

11. A vehicle (1) comprising the second processing circuitry (25) of the computer system (15) of claim 8 or 9.

12. A computer-implemented method comprising:
determining (S41) a set of vehicle control parameters, using predictive optimization (29) of a vehicle model with a first prediction horizon (h₁), the predictive optimization (h₁) being constrained by a set of allowed vehicle states at the first prediction horizon (h₁); and
controlling (S42) an operation of a vehicle (1) using the determined set of vehicle control parameters, wherein:
the set of allowed vehicle states at the first prediction horizon is a set (S₀) of initial vehicle states estimated to result in a set (Sₕ₂) of safe vehicle states at a second prediction horizon (h₂) longer than the first prediction horizon (h₁).

13. The method of claim 12, wherein the method comprises:
determining the set of allowed vehicle states in an offline process using predictive optimization (29) of the vehicle model with the second prediction horizon.

14. The method of claim 13, wherein the method comprises:
determining the set of allowed vehicle states using machine learning (31).

15. A computer program product comprising program code for performing, when executed by the processing circuitry comprised in the computer system of any one of claims 1-9, the method of any of claims 12-14.
